# EUROPÄISCHE PATENTSCHRIFT

(11) **EP 1 476 673 B1**
(45) Veröffentlichungstag und Bekanntmachung des Hinweises auf die Patenterteilung: **21.09.2005**
(21) Anmeldenummer: 03739477.2
(22) Anmeldetag: 12.02.2003
(51) Int. Cl.: F16D 65/56

(54) **SCHEIBENBREMSE MIT ELEKTROMOTORISCH ANGETRIEBENER NACHSTELLVORRICHTUNG UND VERFAHREN ZUR STEUERUNG EINER SCHEIBENBREMSE**
DISK BRAKE WITH AN ELECTRIC MOTOR DRIVEN ADJUSTMENT DEVICE AND METHOD FOR CONTROLLING A DISK BRAKE
FREIN A DISQUE MUNI D'UN DISPOSITIF DE RATTRAPAGE DE JEU A COMMANDE ELECTRIQUE

(30) Priorität: 13.02.2002 DE 10206088
(43) Veröffentlichungstag der Anmeldung: 17.11.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); GSCHOSSMANN, Günther, 84579 Ampfing (DE); PALKOVICS, Laszlo, 71750 Schwieberdingen (DE)
(74) Vertreter: Mattusch, Gundula
(86) Internationale Anmeldenummer: PCT/EP2003/001366
(87) Internationale Veröffentlichungsnummer: WO 2003/069181

(56) Entgegenhaltungen:
- EP-A- 0 947 724
- EP-A- 0 995 923
- DE-A- 19 756 519
- US-A- 3 498 421

## Beschreibung

Die Erfindung betrifft eine Scheibenbremse nach dem Oberbegriff des Anspruches 1 und ein Verfahren zur Steuerung einer Scheibenbremse nach dem Oberbegriff des Anspruchs 15.

Scheibenbremsen mit elektromotorisch betätigten Nachstellsystemen sind an sich bekannt, so z.B. aus der DE 197 56 519 A1, der DE 37 16 202 A1 oder der WO 99/05428.

Druckluftbetätigte Scheibenbremsen sind üblicherweise zur Einhaltung eines korrekten Bremslüftspieles mit automatisch mechanisch wirkenden Verschleißnachstellvorrichtungen ausgestattet.

Diese Verschleißnachstelleinrichtungen werden bei jeder Betätigung der Bremse durch eines der Bauteile der Zuspannmechanik aktiviert und korrigieren ein zu groß gewordenes Bremslüftspiel durch eine Verstellbewegung an den längenveränderlichen Kolben der Bremsbetätigung.

Derartige mechanisch wirkende Verschleißnachstelleinrichtungen sind nicht in der Lage ein z.B. infolge thermische Ausdehnung von Bremsscheibe und Bremsbelägen zu klein gewordenes Lüftspiel wieder zu vergrößern.

Hier liegt der wesentliche Vorteil unabhängig gesteuerter Verschleißnachstellsysteme, die z.B. mittels elektromotorischem Antrieb bei Verwendung einer geeigneten Steuerelektronik realisierbar sind.

Die Idee des elektrischen Nachstellmotors zum Antrieb der Nachstelleinrichtung (N) der Scheibenbremse hat sich an sich bewährt.

Ebenso vorteilhaft können im Servicefall die Nachstellspindeln mit Hilfe der elektronischen Steuerung des Nachstellsystems zum Ersetzen der verschlissenen Bremsbeläge durch Neue selbsttätig in die Ausgangsposition zurückgestellt werden.

Es sind lüftspielmessende Systeme bekannt sowie solche, die im Einstellvorgang das Lüftspiel zunächst vollständig beseitigen und dann durch Rückwärtsdrehen der Gewindespindeln der längenveränderlichen Kolben das Soll Lüftspiel einstellen.

Die zuletzt genannte Ausführung hat den Vorteil, daß zur Einstellung des Lüftspieles keine zusätzlichen Sensoren benötigt werden. Der Nachteil besteht darin, daß eine bedarfsabhängige Lüftspieleinstellung eine Erkennung des Bremsvorganges voraussetzt und hierzu entsprechende Signale anderer Fahrzeugsysteme benötigt werden. ( Bremslichtschalter , CAN Verbindung zum EBS , falls vorhanden ).

Dies schränkt die Anwendbarkeit dieser elektrischen Verschleißnachstellsysteme außerordentlich ein, da Nutzfahrzeuge der verschiedenen Anwendungskategorien diesbezüglich völlig unterschiedliche Ausrüstung aufweisen.

Nachteilig ist dabei insbesondere, daß die gattungsgemäße Scheibenbremse nicht unabhängig von externen, außerhalb der Scheibenbremse angeordneten elektrischen oder elektronischen Fahrzeugsystemen, insbesondere Steuerungsgeräten wie AB S- oder EBS-Steuerungsgeräten ist.

Die Lösung dieses Problems ist die Aufgabe der Erfindung.

Diese Aufgabe wird durch den Gegenstand des Anspruches 1 gelöst. Die Erfindung löst die Aufgabe ferner durch das im Anspruch 15 angegebene Verfahren. Vorteilhafte Ausgestaltungen sind den Unteransprüchen zu entnehmen.

Nach der Erfindung ist eine an oder in der Scheibenbremse angeordnete Steuerungseinrichtung zur Steuerung zumindest der wenigstens einen elektromotorischen Nachstellvorrichtung vorgesehen, insbesondere ist sie direkt in die Scheibenbremse integriert.

Die Erfindung schafft ferner ein Verfahren zur Steuerung einer Scheibenbremse nach einem der vorstehenden Ansprüche, bei dem die Steuerung der Nachstellvorrichtung der Scheibenbremse mit einer direkt in die Scheibenbremse integrierten Steuerungseinrichtung durchgeführt wird.

Die Integration der Steuerungseinrichtung in die Scheibenbremse erweitert den Einsatzbereich der Scheibenbremse erheblich. Aufwendige Verbindungen von der Bremse zu einer übergeordneten Steuerungseinrichtung können entfallen, es genügt vielmehr unter Umständen, der Scheibenbremse nur elektrische Energie zuzuführen, wobei optional natürlich auch eine zusätzliche Übertragung von Informationen bzw.

Daten zwischen einer übergeordneten oder anderen Steuerungseinrichtung am Fahrzeug denkbar ist.

Nach einer weiteren - besonders vorteilhaften Variante - ist die Steuerungseinrichtung außen am Bremssattel angeordnet, vorzugsweise in einem Gehäuse, das an den Bremssattel angesetzt ist. Insbesondere sind die Steuerungseinrichtung und/oder der Antriebsmotor wenigstens einer Nachstellvorrichtung in ein an der Bremssattelaußenseite angeordnetes Gehäuse integriert.

Das Gehäuse soll bevorzugt modulartig mit dem Motor am Bremssattel befestigbar sein. Hierdurch wird im Servicefall ein Komplettaustausch der Elektronik mit Motor und Steuerungskomponenten nur durch das Lösen einiger Befestigungselemente wie Schrauben möglich, was den Service deutlich vereinfacht.

Vorzugsweise ist die Steuerungseinrichtung mit einem Steuerungsprogramm versehen, das dazu ausgelegt ist, die Notwendigkeit zur Einleitung eines Nachstellvorganges ausschließlich anhand von innerhalb der Scheibenbremse verfügbaren Informationen zu ermitteln, insbesondere ohne der Scheibenbremse von außen zugeführte Steuersignale.

Insbesondere umfasst die Steuerungseinrichtung einen Steuerungsrechner wie einen Mikroprozessor.

Nach einer Variante ist die Steuerungseinrichtung als autarke Einheit ausgelegt, so dass der Scheibenbremse von außen lediglich eine Versorgungsspannung zuzuführen ist.

Dabei ist es zweckmäßig, wenn aus dem Gehäuse lediglich mechanische Komponenten wie eine Antriebswelle oder dgl. in das innere des Bremssattels führen, so dass die Elektronik nicht den hohen Temperaturen im Inneren des Bremssattels ausgesetzt ist.

Vorzugsweise weist die Nachstellvorrichtung jeweils wenigstens eine oder zwei Nachstelldreheinrichtung(en) beidseits der Bremsscheibe auf. Auf der bremsscheibenabgewandten Rückseite des Bremssattels kann dann das Gehäuse mit der Elektronik und einem Motor und auf der gegenüberliegenden Seite des Bremssattels der weitere Motor ohne zusätzliche Steuerungselektronik außen am Bremssattel angeordnet sein.

Nach einer Variante ist die Steuerungseinrichtung mit wenigstens einer in die Scheibenbremse integrierten Sensierungsvorrichtung verbunden oder versehen. Zweckmäßig weist diese einen Endlagensensor, z.B. einen Hallsensor auf, der bevorzugt auf einem Element der Zuspannvorrichtung, insbesondere auf dem Hebelarm des Bremshebels angeordnet ist.

Nach einer einfachen konstruktiven Variante ist die Sensierungseinrichtung ein am Hebelarm des Bremshebels angeordneter Dauermagnet, der in der Ruhestellung des Bremshebels an einem Rollsensor einen ersten Signalzustand erzeugt und wobei der Rollsensor einem zweiten Signal zuschaltet, wenn der Dauermagnet bei einer Bremsbetätigung mit dem Bremshebel vom Rollsensor wegbewegt wird.

Insbesondere wird die Steuerungseinrichtung mit einem Steuerungsprogramm betrieben, welches die Notwendigkeit zur Einleitung eines Nachstellvorganges ausschließlich anhand von innerhalb der Scheibenbremse verfügbaren Informationen ermittelt, insbesondere ohne der Scheibenbremse von außen zugeführte Steuersignale.

Bevorzugt wird ein Nachstellvorgang nach jeder Bremsbetätigung eingeleitet. Alternativ ist es nach einer auch für sich unabhängig betrachtbaren, erfinderischen Variante auch denkbar, dass ein Nachstellvorgang nach einer vorgegebenen Anzahl von Bremsbetätigungen eingeleitet wird.

Nach einer weiteren Variante wird ein Nachstellvorgang innerhalb der vorgegebenen Bremszeitdauer eingeleitet.

Besonders bevorzugt wird ein Nachstellvorgang in vorgegebenen Zeitabständen eingeleitet.

Alternativ ist es auch denkbar, wenn mit in die Scheibenbremse integrierten Sensierungsmitteln sensiert wird, ob ein Nachstellvorgang eingeleitet werden muss.

Zusammengefasst wird mit ein elektromotorisch angetriebenes und elektronisch gesteuertes Verschleißnachstellsystem für druckluft- oder elektromechanisch betätigte gattungsgemäße Scheibenbremsen geschaffen, welches mit Ausnahme der Spannungsversorgung unabhängig von anderen elektrischen oder elektronischen Fahrzeugsystemen ist.

Dabei ist die Steuerelektronik des Verschleißnachstellsystems vollständig in die Bremse integriert und die Notwendigkeit zur Einleitung eines Nachstellvorgangs wird ausschließlich innerhalb der bremsenintegrierten Nachstellersteuerung festgestellt ... wird der Nachstellvorgang ausgeführt.

Ein Nachstellvorgang kann eingeleitet werden :
- Nach jeder Bremsbetätigung
- Nach einer vorgegebenen Anzahl von Bremsbetätigungen
- Nach einer vorgegebenen Bremsdauer
- In vorgegebenen Zeitabständen

Zunächst sei die Lüftspieljustage in vorgegebenen Zeitabständen ( Zeitsteuerung ) erörtert.

Die Lüftspieljustage in vorgegebenen Zeitabständen erfordert den geringsten Steuerungsaufwand, führt jedoch zu einer relativ hohen Häufigkeit von Nachstellvorgängen, da zur Absicherung von Betriebsbedingungen welche eine schnelle Veränderung des Betriebslüftspieles zur Folge haben können alle 2 - 3 Minuten ein Nachstellvorgang erforderlich ist. Solche Betriebsbedingungen bestehen z.B. bei typischen Hochgebirgsabfahrten wo bei Beginn der Abfahrt in der Aufheizphase ein starkes Belagwachsen durch Wärmeausdehnung erfolgt welches nicht durch entsprechenden Verschleiß kompensiert wird und gegen Ende der Abfahrt extremer Bremsbelagverschleiß aufgrund der hohen Bremsbelagtemperaturen.

Bei der Annahme, daß alle 2 Minuten ein Nachstellvorgang ausgeführt wird ergeben sich bei einer Gesamtfahrstrecke von 1 Million km für
- Einen Fern LKW mit 70 km/h Durchschnittsgeschwindigkeit 420 000 Nachstellvorgänge
- Einen Stadtomnibus mit 20 km/h Durchschnittsgeschwindigkeit 1,5 Millionen Nachstellvorgänge
   Die große Häufigkeit der Nachstellvorgänge erfordert eine besonders verschleißresistente Auslegung des mechanischen Teils der Nachstellvorrichtung und ist mit höherem Stromverbrauch und damit höherer Temperaturbelastung der elektrischen und elektronischen Bauteile verbunden.
   Die notwendige Häufigkeit der Nachstellvorgänge kann erheblich reduziert werden, wenn bedarfsabhängig nachgestellt wird z.B.
- Nach jeder Bremsung
- Nach einer vorgegebenen Anzahl von Bremsungen
- Nach einer vorgegebenen Gesamtdauer der seit dem letzten Nachstellvorgang erfolgten Bremsungen

Alle gegebenen Möglichkeiten einer bedarfsabhängigen Nachstellung setzen eine Erkennung des Bremszustandes voraus. Da dies ohne Verbindung zu anderen Fahrzeugsystemen erfolgen soll muß die bremsenintegrierte Nachstellelektronik mit Möglichkeiten ausgestattet werden Anfang und Ende eines Nachstellvorganges zu erkennen. Dies ist durch die nachfolgend beschriebenen Maßnahmen einzeln oder in Kombination, möglich.

Nach einer einfachen Variante ist eine Sensierung der Bewegung eines Bauteils der Zuspannmechanik, vorzugsweise des Bremshebels denkbar.

Da hier nur ein Endlagensensor erforderlich ist kann prinzipiell ein Mikroschalter eingesetzt werden, der betätigt wird, wenn der Hebel aus seiner Ruhelage wegbewegt wird bzw. wieder in diese Ruhelage zurückkehrt.

Eine berührungslose Erfassung der Endlagenposition ist z.B. mit einem in die am Sattelkopf installierte Nachstellerelektronik integrierten Hallsensor möglich. Hierzu wird auf das bewegte Bauteil, z.B. auf dem Hebelarm des Bremshebels, ein kleiner Dauermagnet angebracht, der in Ruhestellung des Bremshebels am Hallsensor einen ersten Signalzustand erzeugt und wobei der Hallsensor in seinen zweiten Signalzustand umschaltet, wenn der Dauermagnet bei einer Bremsbetätigung mit dem Bremshebel wegbewegt wird.

Dieser zweite Signalzustand des Hallsensors identifiziert eindeutig den Bremszustand. Es somit möglich auch die Bremsdauer zu ermitteln und auch die Gesamtbremsdauer seit dem letzten Nachstellvorgang aufzusummieren.

Der Dauermagnet ist so auf dem Bremshebel angeordnet, daß er in der Lage ist in der Ruhelage des Bremshebels den in der Nachstellelektronik integrierten Hallsensor entsprechend zu beeinflussen. Hierzu wird die Nachstellelektronik vorteilhaft auf den Sattelkopf so angeordnet, dass der auf dem Bremshebel befindliche Dauermagnet und der in der Nachstellelektronik integrierte Hallsensor in Ruhelage des Bremshebels nur einen Abstand von wenigen mm aufweisen.

Denkbar ist auch eine Erzeugung einer Drehbewegung am Elektromotor des Nachstellantriebes bei einer Betätigung des Bremshebels und Erkennen dieser Drehbewegung durch die Positionssteuerung des Elektromotors.

Bei dieser Variante wird bei einer Betätigung des Bremshebels eine Drehbewegung auf eine Welle des Nachstellgetriebes eingeleitet, welche von dieser Getriebewelle über die zwischengeschalteten Zahnräder auf den Antriebsmotor übertragen wird. Ggf. kann die Drehbewegung auch unmittelbar an der Antriebswelle des Elektromotors hervorgerufen werden.

Da der Antriebsmotor über eine Einrichtung zur Positionssteuerung verfügt, z.B. eine Resolversteuerung oder Decodiereinrichtung, löst nun die eingeleitete Drehbewegung an dieser Decodiereinrichtung einen oder mehrere Signalimpulse aus. Diese Signalimpulse werden an die Nachstellerelektronik weitergeleitet. Die Nachstellersteuerung stellt somit die Drehbewegung fest und da diese Drehbewegung im stromlosen Zustand des Elektromotors erfolgt, wird sie eindeutig als Hebelbewegung erkannt. Da die Decodiereinrichtung des Elektromotors auch eine Drehrichtungserkennungsfunktion beinhaltet wird aus der Drehrichtung des Elektromotors auch erkannt, ob der Bremshebel im Sinne einer Zuspannbewegung betätigt wird oder ob ein Rückhub des Hebels vorliegt.

Auf diese Weise werden Anfang und Ende einer Bremsbetätigung eindeutig identifiziert.

Durch Ermittlung der Zeitspanne zwischen Zuspannhub und Rückhub des Bremshebels kann auch die Bremsdauer ermittelt werden, womit auch die Aufsummierung der Gesamtbremsdauer seit dem letzten Nachstellvorgang möglich ist.

Die Drehbewegung des Elektromotors kann vorteilhaft dadurch hervorgerufen werden, daß der Tragkörper des Nachstellgetriebes mit den Betätigungskolben der Bremse so verbunden ist, daß er mitsamt dem Getriebe bei Betätigung der Bremse mit den Bremskolben in Richtung der Bremsscheibe bewegt wird. Diese Relativbewegung gegenüber der feststehenden Abdeckplatte des Bremsengehäuses kann nun zur Erzeugung der Drehbewegung ausgenutzt werden.

Zweckmäßig ist ferner eine ständige Bewegung eines der Elektromotoren und Erkennen des Bremszustandes durch Ermittlung des Motorstillstandes im bestromten Zustand.

Eine andere Ausführungsmöglichkeit ist darin gegeben, daß die Elektromotoren der Nachstellvorrichtung ständig bzw. mit nur kurzen Unterbrechungen geringfügig, z.B. nur wenige Umdrehungen, hin und her bewegt werden. Liegt eine Bremsbetätigung vor, kann diese Bewegung nicht ausgeführt werden, da das vom Elektromotor erzeugte Drehmoment nicht ausreicht die bei einer Bremsung an den Stellspindeln hervorgerufene Reibung zu überwinden. Der Stillstand des Elektromotors im bestromten Zustand wird von der Nachstellerelektronik eindeutig als Bremsbetätigung erkannt.

Das Ende der Bremsbetätigung wird auf gleiche Art ermittelt, indem festgestellt wird, wann der Motor wieder drehbar wird.

Um die mechanische und thermische Belastung der Elektromotoren gering zu halten, wird der Motor in der Betriebsart "Erkennen des Bremszustandes" vorzugsweise mit einem gegenüber dem Nachstellbetrieb reduzierten Leerlaufstrom angesteuert. Weiterhin ist es vorteilhaft, die Drehbewegung abwechselnd mit dem Inneren- und dem äußeren Nachstellantrieb auszuführen. Zur Bremserkennung ist es nämlich ausreichend, wenn einer der beiden Elektromotoren gestoppt wird. Zwischen den Betätigungen der Elektromotoren kann eine Pause eingelegt sein, die jedoch nicht länger sein darf als eine übliche Bremsbetätigung. Bei einer Anpassungsbremsung wird z.B. das Bremspedal in der Regel mindestens 1,5sec lang betätigt. Die Pause zwischen zwei Betätigungen der Nachstellmotoren kann somit eine Sekunde betragen, um noch zuverlässig jede Bremsbetätigung zu erfassen.

Im Bremserkennungsmodus beträgt für eine typische Auslegung die mittlere Motordrehzahl z.B. 3000 (1/min) = 50 (1/sec)

Der Betrieb der Elektromotoren im Bremserkennungsmodus kann somit wie folgt ablaufen :
Start
   0 - 0,3 sec Motor Außen rechtsdrehend angesteuert
   0,3 - 1,3 sec Pause ( beide Motoren stromlos )
   1,3 - 1,6 sec Motor Innen linksdrehend angesteuert
   1,6 - 2,6 sec Pause
   2,6 - 2,9 sec Motor Außen linksdrehend angesteuert
   2,9 - 3,9 sec Pause
   3,9 - 4,2 sec Motor Innen rechtsdrehend angesteuert

Ein kompletter Zyklus beträgt bei diesem Beispiel 4,2sec . Innerhalb eines Zyklus wird jeder Motor 0,6 Sekunden lang mit Strom beaufschlagt. Die Einschaltdauer eines Motors beträgt in diesem Beispiel 14,3 % .Die Laufzeit der Motoren pro Betätigung kann je nach Getriebeauslegung ( Betrag des "toten Drehwinkels" infolge Zahnspiel und Gewindespiel )auch niedriger angesetzt werden. Es erscheinen auch 0,2 sec Laufzeit ( ca.10 Motorumdrehungen ) völlig ausreichend, womit die Einschaltdauer weniger als 10 % beträgt.

Bei dieser Art der Bremserkennung kann die Bewegungsrichtung des Bremshebels nicht unmittelbar erkannt werden. Um Bremsbeginn und Bremsende zu identifizieren, wird in der Nachstellerelektronik der jeweils vorherige Zustand gespeichert. Die erste Blockierung eines der beiden Elektromotoren nach vorgehender freier Beweglichkeit derselben wird als Bremsbeginn identifiziert, die erste freie Bewegung eines der beiden Elektromotoren nach vorheriger Blockade derselben dagegen als Bremsende.
Auf diese Weise ist es möglich, die Bremsdauer zu ermitteln und die Gesamtbremsdauer seit dem letzten Nachstellvorgang.

Die beschriebenen Methoden der Bremszustandserfassung sind jede für sich anwendbar. Ggf. sind jedoch auch Kombination von zwei oder mehrerer dieser Methoden möglicht. Insbesondere ist es vorteilhaft, die reine Zeitsteuerung als Back Up Lösung mit den beschriebenen Methoden zur bedarfsabhängigen Nachstellersteuerung zu kombinieren. D.h. es wird eine Steuerung angewendet, bei welcher im Normalfall die Nachstellersteuerung über eine Bremszustandserkennung betrieben wird. Sollte diese jedoch z.B. aufgrund eines Sensorfehlers unwirksam sein, schaltet die Nachstellersteuerung automatisch auf die Zeitsteuerung um.

Weitere vorteilhafte Merkmale sind:
- Von anderen Fahrzeugsystemen unabhängiges elektrisch/elektronisch gesteuerte Verschleißnachstellsystem.
- Integration der elektronischen Steuerung in die Bremse.
- Bremseninterne Erkennung der Notwendigkeit eines Nachstellvorganges durch Zeitsteuerung und/oder bremsenintegrierte Bremszustandserkennung
- Integration der Nachstellersteuerung als vormontierte Baueinheit einschließlich Antriebsmotor und elektrischer Anschlüsse in einem von Außen an der Bremse zugänglichen Deckel.
- Integration des elektrischen Antriebsmotors einschließlich der Positionserkennung in die Schaltungsträgereinheit

Nachfolgend wird die Erfindung anhand von Ausführungsbeispielen unter Bezug auf die beigefügten Figuren näher erläutert. Es zeigt:
- Fig. 1: einen Schnitt durch eine Scheibenbremse;
- Fig. 2: die Anordnung einer Nachstellersteuerungseinrichtung an einem Bremssattel;

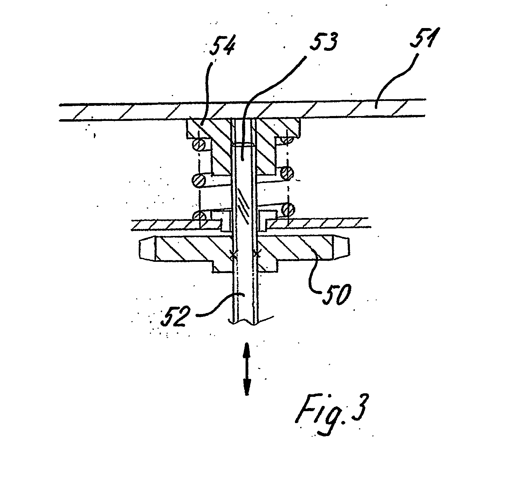

- Fig. 3: eine Schnittdarstellung eines konstruktiven Details;
- Fig. 4: ein Flussdiagramm eines Steuerungsverfahrens.

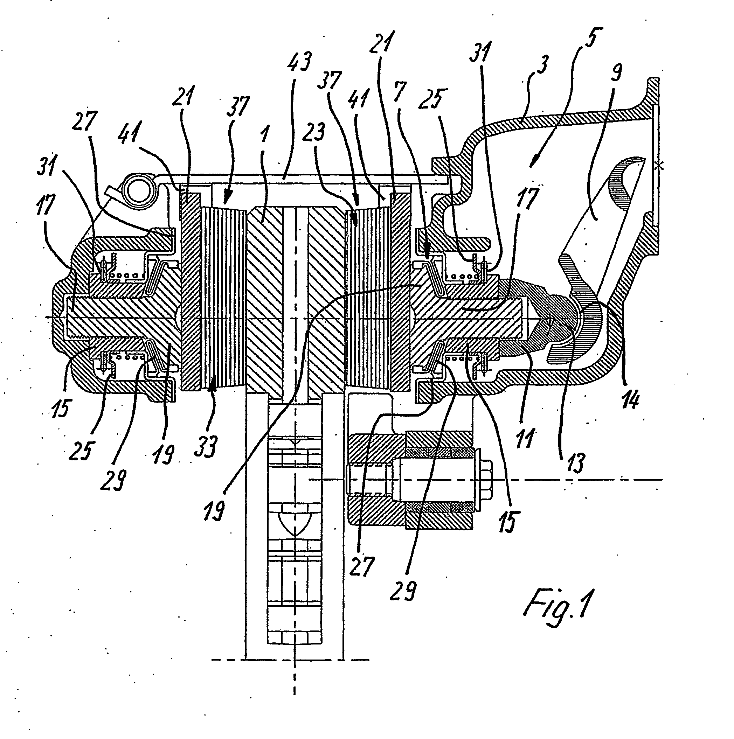

Zunächst sei der prinzipielle Aufbau der Scheibenbremse nach Fig. 1 beschrieben, um beispielhaft den Aufbau einer Scheibenbremse mit elektromagnetisch betätigten Nachstellvorrichtungen auf beiden Stirnseiten der Bremsscheibe zu erläutern.

Fig. 1 zeigt einen Schnitt durch eine Schiebesattel-Scheibenbremse mit einem hier einteiligen, eine Bremsscheibe 1 übergreifenden Bremssattel 3. Die Erfindung ist auch bei anderen Scheibenbremsbauarten einsetzbar, so bei Schiebe- oder Festsattelbremsen.

Alternativ kann der Bremssattel 3 auch zweiteilig ausgebildet sein (hier nicht dargestellt), wobei die beiden Bremssattelteile dann vorzugsweise mittels Schraubbolzen miteinander verbunden werden und wobei vorzugsweise eines der beiden Bremssattelteile rahmenartig die Bremsscheibe in ihrem oberen Umfangsbereich einfasst und das weitere Bremssattelteil zur Aufnahme einer Zuspannvorrichtung dient, was eine einfache Anpassung der Bremse an Zuspannvorrichtungen verschiedenster Bauart ermöglicht.

Auf der einen Seite der Bremsscheibe 1 ist im Bremssattel 3 eine Zuspannvorrichtung 5 angeordnet, welche durch eine zur Bremsscheibe hin weisende Öffnung 7 des Bremssattels 3 in diesen einsetzbar ist (auch ganz oder teilweise vormontiert).

Die Zuspannvorrichtung 5 weist einen von einer (hier nicht dargestellten) Kolbenstange betätigbaren Drehhebel 9 auf, welcher über hier nicht erkennbare Lagerelemente wie Kugeln und zusätzliche Lagerschalen am Bremssattel 3 abgestützt ist.

Der Drehhebel 9 wirkt an seiner vom Bremssattel 3 abgewandten Seite an einer mittigen Stelle oder vorzugsweise an zwei seitlichen Enden jeweils auf ein Zwischenelement 11 ein, welches an seinem dem Drehhebel zugewandten Ende einen halbkugelartigen Ansatz 13 aufweist. Zwischen dem Ansatz 13 und dem Drehhebel 9 ist hier eine Gleitlagerschale 14 angeordnet.

Das Zwischenelement 11 stützt sich an der Stirnseite einer Nachstellmutter 15 ab, in die eine Stellspindel 17 eingesetzt, insbesondere eingeschraubt ist, die an ihrem vom Drehhebel 1 abgewandten Ende ein Druckstück 19 trägt, welche an einer Belaghalteplatte 21 eines zuspannseitigen Bremsbelages 23 anliegt.

Wird der Drehhebel 9 durch Vorschieben der Kolbenstange verschwenkt, bewirkt das untere exzenterartige Ende (hier nicht zu erkennen) des Drehhebels 9 ein Vorschieben des Zwischenelementes 11 in Richtung der Bremsscheibe 1. Dabei werden die Nachstellmutter 15 und die Stellspindel 17 mit in Richtung des Bremsbelages 23 gedrückt und der zuspannseitige Bremsbelag 23 in Richtung der Bremsscheibe 1 verschoben.

Die Nachstellmutter 15 und die Stellspindel 17 sind in zwei Halteplatten 25, 27 eingesetzt. Eine faltenbalgartige Dichtung 29 dichtet den Raum zwischen der einen Halteplatte 25 und dem Druckstück gegen ein Eindringen von Schmutz und Feuchtigkeit ab.

Auf der Nachstellmutter ist ein Zahnrad 31 relativ zur Nachstellmutter unverdrehbar befestigt. Das Zahnrad kann über weitere Getriebeglieder wie weitere Zahnräder insbesondere von einem hier nicht dargestellten Elektromotor betätigt werden, um den durch Bremsungen verursachten Bremsbelagverschleiß auszugleichen.

Wird die Nachstellmutter 15 verdreht, wird die Stellspindel 17 relativ zur Nachstellmutter 15 axial bewegt und damit das Lüftspiel zwischen Bremsbelag und Bremsscheibe verändert. Alternativ ist auch eine Betätigung über eine zwischen Drehhebel 9 und Nachstellmutter 15 geschaltete Koppelmechanik denkbar (hier nicht dargestellt)

Bevorzugt sind zwei der Nachstelldrehantriebe aus Nachstellmutter 15 und Stellspindel 17 auf der Seite der Zuspannvorrichtung 5 nebeneinander angeordnet, so dass der Bremsbelag an zwei Stellen mit Druck beaufschlagt wird.

Zwei weitere Nachstelldrehantriebe mit einem vorzugsweise eigenen elektromotorischen Antrieb sind auf der von der Zuspannvorrichtung abgewandten Seite der Bremsscheibe 1- der Reaktionsseite - im Bremssattel 3 angeordnet. Auch diese Nachstelldrehantriebe weisen jeweils eine Nachstellmutter 15 und eine Stellspindel 17 auf, die es ermöglichen, das Druckstück 19 in Richtung des auf der Reaktionsseite der Bremsscheibe 1 angeordneten Bremsbelages 33 in Richtung der Bremsscheibe 1 zu verschieben.

Die Einstellung des Lüftspieles erfolgt vorzugsweise rechnergesteuert ausschließlich mit einer direkt in die Scheibenbremse integrierten Steuerungseinrichtung.

Da auf jeder Stirnseite der Bremsscheibe 1 jeweils wenigstens eine eigene Nachstellvorrichtung - hier jeweils bestehend aus zwei Nachstelldrehantrieben mit elektromotorischem Antrieb - angeordnet ist, ist es möglich, den Bremssattel 3 hier als einen Schiebe oder Schwenksattel auszubilden, dessen Schiebeweg oder Schwenkwinkel derart bemessen ist, dass mit ihm weniger als der maximale Nachstellweg, insbesondere sogar lediglich der maximale Arbeitshub beim Zuspannen der Bremse überbrückbar ist.

Zu diesem Zweck ist der Bremssattel 3 an einer Radachse oder -nabe relativ zu dieser an einem elastischen Lager verschwenk oder verschiebbar befestigt. Ergänzend kann auch die Bremsscheibe 1 verschieblich an der Radachse oder -nabe befestigt sein. Da der zu überbrückende Verschiebeweg oder Verschwenkwinkel kleiner als der Verschiebeweg oder der Verschwenkwinkel ist, den ein vergleichbarer Bremssattel nach dem Stand der Technik überbrücken musste, bei dem nur auf einer Seite der Bremsscheibe 1 eine Nachstellvorrichtung angeordnet war, ergibt sich die überraschende Möglichkeit dazu, die Verschiebbarkeit oder die Verschwenkbarkeit durch eine elastische Anbindung zwischen dem Bremssattel und der Radnabe oder -achse zu realisieren.

Das elastische Lager ist hier parallel zur Bremsscheiben-Symmetrieachse angeordnet, d.h. es findet im wesentlichen keine Schwenkbewegung um eine Lagerdrehachse statt, sondern eine elastische Längsverschiebbarkeit des Sattels mit einer elastischen Schwenkbarkeit quer zur Längsachse der hier als Lager vorgesehenen Ultrabuchse. Hierbei wird die Bewegung des Bremssattels zum Ausgleich der Elastizität nicht ausschließlich als Schwenkbewegung ausgeführt, wodurch insbesondere Anpassungsbremsungen mit nahezu reiner Längsverschiebung des Bremssattels ausgeführt werden und nur die selten auftretenden Bremsungen mit hohen Bremskräften das Verschwenken des Bremssattels erfordern. Alternativ können auch zwei Lager mit Schwenkachsen parallel zur Scheibendrehachse vorgesehen sein (hier nicht dargestellt).

Wesentlich ist hier, dass die Nachstellvorrichtungen elektromotorisch angetrieben werden, z.B. durch Elektromotore zwischen den Drehspindeln oder außerhalb des Bremssattels, welche über eine nicht dargestellte Antriebsverbindung wirken.

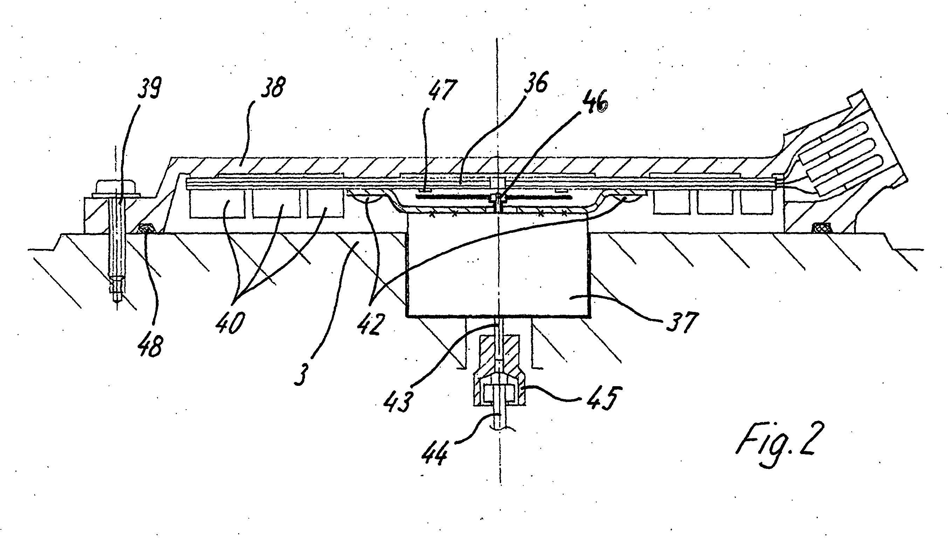

Die Integration der Steuerungselektronik für die Nachstelleinrichtung wird gem. Fig. 2 vorteilhaft ausgeführt, indem eine die elektronischen Bauelemente aufnehmende Schaltungsträgerplatine ( Leiterplatte bzw. Träger einer Hybridschaltung ) 36 mit dem elektrischen Antriebsmotor 37 und einem auch die elektrischen Anschlussverbindungen ( Steckkontakte und/oder Kabelverbindungen) aufnehmenden Deckel 38 zu einer Baueinheit zusammengefasst wird und diese Baueinheit an dem der Bremsscheibe abgewandten Bereich des Zuspanngehäuses (Bremssattel 3) von Außen befestigt wird, z.B. mit Schrauben 39 an der Rückseite des Bremssattels 3 auf dessen von der Bremsscheibe 1 abgewandten Seite (in Fig. 1 rechts).

Das Gehäuse 38 wird soweit möglich an die Geometrie des Bremssattels 3 angepasst, so dass es optisch u.U. sogar wie ein Teil des Bremssattels wirkt. Der Motor kann unkompliziert direkt auf der Leiterplatte 36 befestigt werden.

Auf diese Weise sind alle elektrischen/elektronischen Funktionen in einer vormontierte Baueinheit zusammengefasst, so daß bei der Bremsenmontage nur noch das Befestigen dieser Baueinheit an das Zuspanngehäuse bzw. an den Bremssattel 3 der Bremse erfolgen muss. Ebenso vorteilhaft ist diese Lösung im Servicefall bei einem ggf. notwendigen Austausch der elektrisch/elektronischen Baueinheit in einer Kfz - Werkstatt.

Auf einer Leiterplatte 36 oder dem Schaltungsträger einer Hybridschaltung sind ein oder beidseitig die elektronischen Bauelemente 40 der die Nachstellersteuerung bewirkenden Logikschaltung sowie die Leistungssteuerung des elektrischen Antriebsmotors , bzw. der Antriebsmotoren bei beidseitiger Nachstellung, angeordnet. Im mittleren Bereich der Schaltungsträgerplatine ist eine Befestigungsmöglichkeit für den elektrischen Antriebsmotor in Form von Durchgangsbohrungen 41 z.B. für Schrauben 42 oder Nieten vorhanden.

Der elektrische Antriebsmotor weist einen Befestigungsflansch auf, mit dem die Befestigung des Antriebsmotors 37 gegen die Schaltungsträgerplatine 36 und mit dieser gegen den Deckel 38 erfolgt. Die Befestigung an den Deckel erfolgt durch Schrauben 42 oder Nieten, wobei die Schaltungsträgerplatine zwischen dem Flansch des Antriebsmotors 37 und dem Deckel eingeklemmt wird. Zur leichteren Montage kann auch eine zusätzliche Verbindung des Antriebsmotors 37 mit der Schaltungsträgerplatine erfolgen, z.B. durch Hohlniete, durch welche dann die Schraub- oder Nietbolzen zur Befestigung der ganzen Einheit an den Deckel hindurchgeführt werden.

Der Antriebsmotor 37 verfügt über zwei Wellenenden, wobei das erste, von der Schaltungsträgerplatine abgewandte Wellenende 43 zum Antrieb des Nachstellgetriebes über eine Steckkupplung 45 und eine Getriebewelle 44 dient und das zweite, der Schaltungsträgerplatine zugewandte Wellenende 45 einen Decodierrotor 46 trägt, welcher zur Winkelpositions-, Dehzahl- und Drehrichtungserkennung des Antriebsmotors 37.

Der Decodierrotor ist zur Schaltungsplatine räumlich so angeordnet, daß die Positions- bzw. Drehzahlabfrage über in die elektronische Schaltung integrierte Sensoren erfolgt.

Der Decodierrotor ist dabei vorzugsweise scheibenförmig aufgebaut und weist wechselnd magnetisierte, radial verlaufende Bereiche auf. Die zugeordneten Sensoren sind vorzugsweise Hallsensoren 47, welche auf der Schaltungsträgerplatine so angeordnet sind, daß sie bei rotierender Motorwelle 45 durch die vorbeibewegten unterschiedlich magnetisierten Bereiche der Decodierscheibe in entsprechend wechselnde Schaltungszustände versetzt werden, welche zur Auswertung an die elektronische Schaltung weitergeleitet werden.

Es sind auch an der Meßmethoden denkbar, z.B. könnte in gleichartiger Anordnung auch eine optoelektronische Positions- und Drehzahlerfassung realisiert werden.
Im Gehäuse 38 bzw. Deckel, der vorzugsweise aus Kunststoff ausgeführt ist, sind nach außen führende elektrische Verbindungen in Form von Steckkontakten aufgenommen. Die einzelnen Steckkontakte sind mit dem Schaltungssystem auf der Schaltungsträgerplatine in entsprechender Weise verbunden.

Das Gehäuse 38 weist in seiner der Befestigungsebene am Zuspanngehäuse zugewandten Fläche eine umlaufende Abdichtung 48 auf sowie in einer flanschartigen Verbreiterung Schraubendurchgangslöcher auf, durch welche die vormontierte gehäuseeinheit mit Schraubbolzen 39 am Zuspanngehäuse befestigt wird.

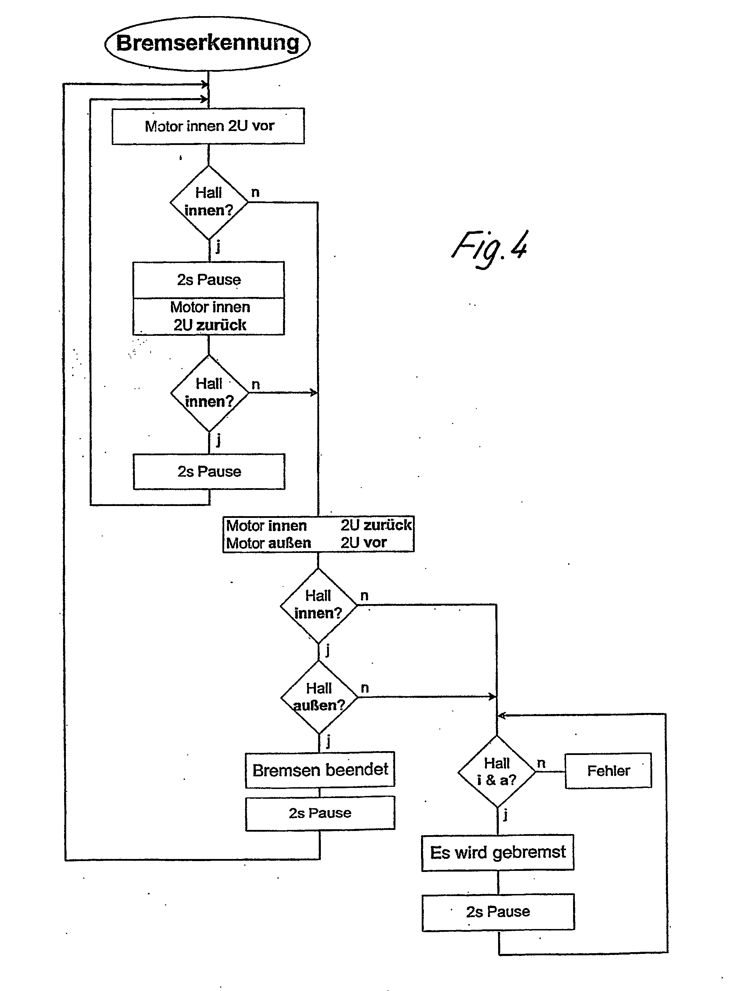

Fig. 4 zeigt eine weitere beispielhafte und besonders vorteilhafte Ausführungsform. Eines der Getrieberäder 50 zwischen Elektromotor und Nachstell-Dreheinrichtungen verfügt hier über eine in Richtung auf die feststehende Abdeckplatte 51 weisende Verlängerung der Getrieberadwelle 52. Diese Getrieberadwelle 52 ist an ihrem Ende mit einem Steilgewinde 53 ausgestattet welches, in eine Gewindemutter 54 eingreift, die durch eine Druckfeder 55 auf die Abdeckplatte 51 gepresst wird.

Wird nun bei Betätigung der Bremse die Getrieberadwelle 52 mit ihrem Steilgewinde 53 in die Gewindemutter hineinbewegt, so wird zwangsläufig eine Drehbewegung des Getrieberades 50 hervorgerufen. Das übertragbare Drehmoment ist dabei durch die Reibkraft an der Gewindemutter 54 begrenzt, welche durch das federelastische Anpressen derselben an die Abdeckplatte 50 erzeugt wird.

Auf diese Weise wird sichergestellt, daß eine Drehung am Nachstellgetriebe und Elektromotor nur in der Phase der Überwindung des Lüftspieles erfolgt. Sobald eine Reaktionskraft der Bremse bei Anlegen der Bremsbacken an die Bremsscheibe entsteht werden die Gewindespindeln durch hohe Gewindereibkräfte blockiert und die Gewindemutter 54 rutscht gegen die Aufstandsfläche an der Abdeckplatte 50 durch.

### Bezugszeichen

- Bremsscheibe: 1
- Bremssattel: 3
- Zuspannvorrichtung: 5
- Öffnung: 7
- Drehhebel: 9
- Zwischenelement: 11
- Ansatz: 13
- Gleitlagerschale: 14
- Nachstellmutter: 15
- Stellspindel: 17
- Druckstück: 19
- Belaghalteplatte: 21
- Bremsbelag: 23
- Halteplatten: 25, 27
- Dichtung: 29
- Zahnrad: 31
- Bremsbelag: 33
- Lager: 59
- Leiterplatte: 36
- Antriebsmotor: 37
- Deckel: 38
- Schrauben: 39
- Bauelemente: 40
- Durchgangsbohrungen: 41
- Schrauben: 42
- Wellenende: 43
- Steckkupplung: 45
- Getriebewelle: 44
- Decodierrotor: 46
- Sensoren: 47
- Abdichtung: 48
- Getrieberäder: 50
- Abdeckplatte: 51
- Getrieberadwelle: 52
- Steilgewinde: 53
- Gewindemutter: 54
- Druckfeder: 55

## Patentansprüche

1. Scheibenbremse, insbesondere für Nutzfahrzeuge, mit
einem eine Bremsscheibe (1) übergreifenden Bremssattel (3),
einer im Bremssattel (3) angeordneten, pneumatisch oder elektromotorisch betätigbaren Zuspanneinrichtung (5) zum Zuspannen der Bremse;
wenigstens einer Nachstellvorrichtung mit elektromotorischem Antrieb zum Ausgleich von Bremsbelagverschleiß durch Nachstellen des Lüftspieles der Scheibenbremse; **gekennzeichnet durch** wenigstens eine Nachstell-Dreheinrichtung auf jeder Seite der Bremsscheibe, die jeweils über wenigstens ein Druckstück (19) auf die Bremsbeläge (23, 33) beidseits der Bremsscheibe einwirken, und **durch**
eine an oder in der Scheibenbremse angeordnete Steuerungseinrichtung zur Steuerung zumindest der wenigstens einen elektromotorischen Nachstellvorrichtung.

2. Scheibenbremse nach Anspruch 1, **dadurch gekennzeichnet, dass** die Steuerungseinrichtung direkt in die Scheibenbremse integriert ist.

3. Scheibenbremse nach Anspruch 1 oder 2, **dadurch gekennzeichnet, dass** die Steuerungseinrichtung am Bremssattel (3) angeordnet ist.

4. Scheibenbremse nach Anspruch 1, 2 oder 3, **dadurch gekennzeichnet, dass** die Steuerungseinrichtung mit dem Elektromotor in einem Gehäuse (38) am Bremssattel (3) angeordnet ist

5. Scheibenbremse nach einem der vorstehenden Ansprüche, **dadurch gekennzeichnet, dass** die Steuerungseinrichtung und/oder der Antriebsmotor wenigstens einer Nachstellvorrichtung in ein an der Bremssattelaußenseite angeordnetes Gehäuse integriert ist.

6. Scheibenbremse nach einem der vorstehenden Ansprüche, **dadurch gekennzeichnet, dass** die Steuerungseinrichtung mit einem Steuerungsprogramm versehen ist, das dazu ausgelegt ist, die Notwendigkeit zur Einleitung eines Nachstellvorganges ausschließlich anhand von innerhalb der Scheibenbremse verfügbaren Informationen zu ermitteln, insbesondere ohne der Scheibenbremse von außen zugeführte Steuersignale.

7. Scheibenbremse nach einem der vorstehenden Ansprüche, **dadurch gekennzeichnet, dass** die Steuerungseinrichtung einen Steuerungsrechner aufweist.

8. Scheibenbremse nach einem der vorstehenden Ansprüche, **dadurch gekennzeichnet, dass** die Steuerungseinrichtung als autarke Einheit derart ausgelegt ist, so dass der Scheibenbremse von außen lediglich eine Versorgungsspannung zuzuführen ist.

9. Scheibenbremse nach Anspruch 4, **dadurch gekennzeichnet, dass** aus dem Gehäuse lediglich mechanische Komponenten in das innere des Bremssattels führen.

10. Scheibenbremse nach einem der vorstehenden Ansprüche, **dadurch gekennzeichnet, dass** die Nachstellvorrichtung jeweils wenigstens eine oder zwei Nachstelldreheinrichtung(en) beidseits der Bremsscheibe aufweist.

11. Scheibenbremse nach einem der vorstehenden Ansprüche, **dadurch gekennzeichnet, daß** die Steuerungseinrichtung mit wenigstens einer in die Scheibenbremse integrierten Sensierungsvorrichtung verbunden oder versehen ist.

12. Scheibenbremse nach Anspruch 10, **dadurch gekennzeichnet, daß** die wenigstens eine Sensierungsvorrichtung einen Endlagensensor aufweist.

13. Scheibenbremse nach Anspruch 10, **dadurch gekennzeichnet, daß** die wenigstens eine Sensierungsvorrichtung einen Hallsensor aufweist

14. Scheibenbremse nach Anspruch 10, **dadurch gekennzeichnet, daß** der Endlagensensor auf einem Element der Zuspannvorrichtung, insbesondere auf dem Hebelarm des Bremshebels angeordnet ist.

15. Scheibenbremse nach Anspruch 13, **dadurch gekennzeichnet, daß** die Sensierungseinrichtung ein am Hebelarm des Bremshebels angeordneter Dauermagnet ist, der in der Ruhestellung des Bremshebels an einem Rollsensor einen ersten Signalzustand erzeugt und wobei der Rollsensor einem zweiten Signal zuschaltet, wenn der Dauermagnet bei einer Bremsbetätigung mit dem Bremshebel vom Rollsensor wegbewegt wird.

16. Verfahren zur Steuerung einer Scheibenbremse nach einem der vorstehenden Ansprüche, **dadurch gekennzeichnet, dass** die Steuerung der Nachstellvorrichtung der Scheibenbremse mit einer direkt in die Scheibenbremse integrierten Steuerungseinrichtung durchgeführt wird.

17. Verfahren nach Anspruch 16, **dadurch gekennzeichnet, dass** die Steuerungseinrichtung mit einem Steuerungsprogramm betrieben wird, welches die Notwendigkeit zur Einleitung eines Nachstellvorganges ausschließlich anhand von innerhalb der Scheibenbremse verfügbaren Informationen ermittelt, insbesondere ohne der Scheibenbremse von außen zugeführte Steuersignale.

18. Verfahren nach Anspruch 16 oder 17, **dadurch gekennzeichnet, daß** ein Nachstellvorgang nach jeder Bremsbetätigung eingeleitet wird.

19. Verfahren nach Anspruch 16 oder 17, **dadurch gekennzeichnet, daß** ein Nachstellvorgang nach einer vorgegebenen Anzahl von Bremsbetätigungen eingeleitet wird.

20. Verfahren nach Anspruch 16 oder 17, **dadurch gekennzeichnet, daß** ein Nachstellvorgang innerhalb der vorgegebenen Bremszeitdauer eingeleitet wird.

21. Verfahren nach Anspruch 16 oder 17, **dadurch gekennzeichnet, daß** ein Nachstellvorgang in vorgegebenen Zeitabständen eingeleitet wird.

22. Verfahren nach Anspruch 16 oder 17, **dadurch gekennzeichnet, daß** mit in die Scheibenbremse integrierten Sensierungsmitteln sensiert wird, ob ein Nachstellvorgang eingeleitet werden muss.

## Claims

1. Disc brake, in particular for commercial vehicles, with:
a brake caliper (3) that extends over a brake disc (1),
a pneumatically or electric-motor actuated brake applicator mechanism (5) for applying the brake, arranged in the brake caliper (3),
at least one adjustment device with electric motor drive for compensating brake lining wear by adjusting the air gap of the disc brake;
**characterised by**
at least one rotary adjustment device on each side of the brake disc, acting in each case via at least one pressure element (19) upon the brake linings (23, 33) on each side of the brake disc,
and by
a control device arranged on or in the disc brake for controlling at least the at least one electric motor driven adjustment device.

2. Disc brake according to Claim 1, **characterised in that** the control device is integrated directly in the disc brake.

3. Disc brake according to Claims 1 or 2, **characterised in that** the control device is arranged on the brake caliper (3).

4. Disc brake according to Claims 1, 2 or 3, **characterised in that** the control device with the electric motor is arranged in a housing (38) on the brake caliper (3).

5. Disc brake according to any of the preceding claims, **characterised in that** the control device and/or the drive motor of at least one adjustment device is integrated in a housing arranged on the outside of the brake caliper.

6. Disc brake according to any of the preceding claims, **characterised in that** the control device is provided with a control program designed to determine the need to initiate an adjustment process exclusively on the basis of information from within the disc brake, and in particular without control signals fed into the disc brake from outside.

7. Disc brake according to any of the preceding claims, **characterised in that** the control device comprises a control computer.

8. Disc brake according to any of the preceding claims, **characterised in that** the control device is designed as an autonomous unit such that only a supply voltage need be fed into the disc brake from outside.

9. Disc brake according to Claim 4, **characterised in that** from the housing only mechanical components lead to the inside of the brake caliper.

10. Disc brake according to any of the preceding claims, **characterised in that** in each case the adjustment device comprises at least one or two rotary adjustment mechanism(s) on each side of the brake disc.

11. Disc brake according to any of the preceding claims, **characterised in that** the control device is connected to or provided with at least one sensor device integrated in the disc brake.

12. Disc brake according to Claim 10, **characterised in that** the at least one sensor device comprises an end position sensor.

13. Disc brake according to Claim 10, **characterised in that** the at least one sensor device comprises a Hall sensor.

14. Disc brake according to Claim 10, **characterised in that** the end position sensor is arranged on an element of the brake applicator mechanism, in particular on the lever arm of the brake lever.

15. Disc brake according to Claim 13, **characterised in that** the sensor device is a permanent magnet arranged on the lever arm of the brake lever, which in the rest position of the brake lever produces a first signal condition at a roll sensor and such that the roll sensor switches to a second signal when the permanent magnet is moved away from the roll sensor by the brake lever during a braking operation.

16. Method for controlling a disc brake according to any of the preceding claims, **characterised in that** the adjustment device of the disc brake is controlled by a control device integrated directly in the disc brake.

17. Method according to Claim 16, **characterised in that** the control device is operated by a control program, which determines the need to initiate an adjustment process exclusively on the basis of information from within the disc brake, and in particular without control signals fed into the disc brake from outside.

18. Method according to Claims 16 or 17, **characterised in that** an adjustment process is initiated after every brake actuation.

19. Method according to Claims 16 or 17, **characterised in that** an adjustment process is initiated after a specified number of brake actuations.

20. Method according to Claims 16 or 17, **characterised in that** an adjustment process is initiated within a specified braking time duration.

21. Method according to Claims 16 or 17, **characterised in that** an adjustment process is initiated at specified time intervals.

22. Method according to Claims 16 or 17, **characterised in that** sensor means integrated in the disc brake sense whether an adjustment process should be initiated.

## Revendications

1. Frein à disque, en particulier pour véhicules utilitaires, comprenant
un étrier (3) de frein enjambant un disque (1) de frein,
un dispositif (5) de serrage pour serrer le frein, disposé dans l'étrier (3) de frein et pouvant être actionné pneumatiquement ou par moteur électrique ;
au moins un dispositif de rattrapage de jeu entraîné par moteur électrique, pour compenser l'usure des garnitures de frein en rajustant le jeu d'aération du frein à disque ;
**caractérisé par** au moins un équipement rotatif de rattrapage de jeu de chaque côté du disque de frein, équipement qui agit respectivement par l'intermédiaire d'au moins un élément (19) de pression sur les garnitures (23, 33) de frein de part et d'autre du disque de frein, et par
un équipement de commande disposé sur ou dans le frein à disque, pour commander au moins le au moins unique dispositif de rattrapage de jeu à moteur électrique.

2. Frein à disque suivant la revendication 1, **caractérisé en ce que** l'équipement de commande est directement intégré dans le frein à disque.

3. Frein à disque suivant la revendication 1 ou 2, **caractérisé en ce que** l'équipement de commande est disposé sur l'étrier (3) de frein.

4. Frein à disque suivant la revendication 1, 2 ou 3, **caractérisé en ce que** l'équipement de commande est disposé avec le moteur électrique dans un boîtier (38) sur l'étrier (3) de frein.

5. Frein à disque suivant l'une des revendications précédentes, **caractérisé en ce que** l'équipement de commande et/ou le moteur d'entraînement d'au moins un dispositif de rattrapage de jeu est intégré dans un boîtier disposé sur le côté extérieur de l'étrier de frein.

6. Frein à disque suivant l'une des revendications précédentes, **caractérisé en ce que** l'équipement de commande est doté d'un programme de commande qui est conçu pour déterminer la nécessité du déclenchement d'un processus de rattrapage de jeu exclusivement à l'aide d'informations disponibles à l'intérieur du frein à disque, en particulier sans signaux de commande apportés de l'extérieur au frein à disque.

7. Frein à disque suivant l'une des revendications précédentes, **caractérisé en ce que** l'équipement de commande comporte un ordinateur de commande.

8. Frein à disque suivant l'une des revendications précédentes, **caractérisé en ce que** l'équipement de commande est conçu en tant qu'unité autarcique, de telle sorte que seule une tension d'alimentation doit être apportée de l'extérieur au frein à disque.

9. Frein à disque suivant la revendication 4, **caractérisé en ce que** seuls des composants mécaniques mènent du boîtier à l'intérieur de l'étrier de frein.

10. Frein à disque suivant l'une des revendications précédentes, **caractérisé en ce que** le dispositif de rattrapage de jeu comporte respectivement au moins un ou deux équipements rotatifs de rattrapage de jeu de part et d'autre du disque de frein.

11. Frein à disque suivant l'une des revendications précédentes, **caractérisé en ce que** l'équipement de commande est relié à ou pourvu d'au moins un dispositif de détection intégré dans le frein à disque.

12. Frein à disque suivant la revendication 10, **caractérisé en ce que** le au moins un dispositif de détection comporte un capteur de fin de course.

13. Frein à disque suivant la revendication 10, **caractérisé en ce que** le au moins un dispositif de détection comporte un capteur à effet Hall.

14. Frein à disque suivant la revendication 10, **caractérisé en ce que** le capteur de fin de course est disposé sur un élément du dispositif de serrage du frein, en particulier sur le bras de levier du levier de frein.

15. Frein à disque suivant la revendication 13, **caractérisé en ce que** le dispositif de détection est un aimant permanent disposé sur le bras de levier du levier de frein, aimant qui produit un premier état de signal dans la position de repos du levier de frein contre un capteur de balancement, et le capteur de balancement délivre un second signal lorsque l'aimant permanent est éloigné du capteur de balancement lors d'un actionnement du frein par le levier de frein.

16. Procédé de commande d'un frein à disque suivant l'une des revendications précédentes, **caractérisé en ce que** la commande du dispositif de rattrapage de jeu du frein à disque est effectuée par un équipement de commande directement intégré dans le frein à disque.

17. Procédé suivant la revendication 16, **caractérisé en ce que** l'équipement de commande est exploité par un programme de commande qui détermine la nécessité du déclenchement d'un processus de rattrapage de jeu exclusivement à l'aide d'informations disponibles à l'intérieur du frein à disque, en particulier sans signaux de commande apportés de l'extérieur au frein à disque.

18. Procédé suivant la revendication 16 ou 17, **caractérisé en ce qu'**un processus de rattrapage de jeu est déclenché après chaque actionnement du frein.

19. Procédé suivant la revendication 16 ou 17, **caractérisé en ce qu'**un processus de rattrapage de jeu est déclenché après un nombre prescrit d'actionnements du frein.

20. Procédé suivant la revendication 16 ou 17, **caractérisé en ce qu'**un processus de rattrapage de jeu est déclenché au cours de la durée de freinage prescrite.

21. Procédé suivant la revendication 16 ou 17, **caractérisé en ce qu'**un processus de rattrapage de jeu est déclenché à des intervalles de temps prescrits.

22. Procédé suivant la revendication 16 ou 17, **caractérisé en ce que**, par des moyens de détection intégrés dans le frein à disque, on détecte si un processus de rattrapage de jeu doit être déclenché.
